# DEMANDE DE BREVET EUROPEEN

(11) **EP 4 685 620 A1**
(43) Date de publication de la demande: **28.01.2026**
(21) Numéro de dépôt: 25191933.8
(22) Date de dépôt: 25.07.2025
(51) Int. Cl.: G06F 3/039, H04M 1/23, G06F 3/04886

(54) **FILM DE PROTECTION POUR L'ÉCRAN TACTILE D'UN TERMINAL DE PAIEMENT ÉLECTRONIQUE ET ENSEMBLE COMPRENANT UN TEL FILM DE PROTECTION ET UN TERMINAL DE PAIEMENT ÉLECTRONIQUE**

(30) Priorité: 26.07.2024 FR 2408297
(71) Demandeur: PayXpert France, 69001 Lyon (FR)
(72) Inventeur: RIEGERT, Nicolas, 300 ORDINO (AD)
(74) Mandataire: Lavoix

(57) **Abrégé**

La présente invention concerne un film de protection (14) pour écran tactile (16) d'un terminal de paiement électronique (12), le film de protection (14) comprenant une première surface et une deuxième surface opposées,
la première surface étant configurée pour être agencée sur un écran tactile (16) d'un terminal de paiement électronique (12),
la deuxième surface comprenant une pluralité de bossages primaires, chaque bossage primaire ayant une forme spécifique configurée pour indiquer tactilement l'emplacement d'au moins un bouton fonctionnel (22A-C) pour la mise en œuvre d'une fonction dédiée défini sur l'écran (16) du terminal de paiement électronique (12), chaque bouton fonctionnel (22A-C) étant distinct d'un bouton numérique (24A-J) correspondant à un chiffre d'un pavé numérique (25) du terminal de paiement électronique (12).

## Description

La présente invention concerne un film de protection pour écran tactile d'un terminal de paiement électronique, ainsi qu'un ensemble comprenant un tel film de protection et un terminal de paiement électronique.

Dans les points de vente, il est de plus en plus fréquent d'utiliser des terminaux de paiement électronique (également appelés TPE) avec un écran tactile pour le paiement par cartes de paiement.

De tels terminaux de paiement électronique n'ont généralement pas de boutons physiques. Par exemple, pour la saisie du code confidentiel, également nommé code PIN (de l'anglais « Personal Identification Number » signifiant numéro d'identification personnel), des boutons tactiles, tel qu'un pavé numérique, sont affichés sur l'écran.

Cependant, ces terminaux de paiement électronique posent des difficultés pour certains types d'utilisateurs, tels que les utilisateurs malvoyants ou aveugles.

Un des buts de l'invention est de proposer un moyen améliorant l'utilisation des terminaux de paiement électronique avec un écran tactile.

A cet effet, l'invention a pour objet un film de protection pour écran tactile d'un terminal de paiement électronique, le film de protection comprenant une première surface et une deuxième surface opposées,
la première surface étant configurée pour être agencée sur un écran tactile d'un terminal de paiement électronique,
la deuxième surface comprenant une pluralité de bossages primaires, chaque bossage primaire ayant une forme spécifique configurée pour indiquer tactilement l'emplacement d'au moins un bouton fonctionnel pour la mise en œuvre d'une fonction dédiée défini sur l'écran du terminal de paiement électronique, chaque bouton fonctionnel étant distinct d'un bouton numérique correspondant à un chiffre d'un pavé numérique du terminal de paiement électronique.

Ledit film de protection permet aux utilisateurs malvoyants une reconnaissance plus aisée des boutons sur un écran tactile d'un terminal de paiement électronique.

En effet, grâce aux bossages primaires du film de protection selon l'invention, un utilisateur malvoyant peut identifier tactilement l'emplacement des boutons affichés sur l'écran tactile.

Suivant d'autres aspects avantageux de l'invention, le film de protection comprend une ou plusieurs des caractéristiques suivantes, prises isolément ou suivant toutes les combinaisons techniquement possibles :
- la pluralité de bossages comprend au moins trois bossages primaires, chaque bouton fonctionnel étant de préférence choisi parmi un premier bouton de validation pour la mise en œuvre d'une validation, un deuxième bouton d'annulation pour la mise en œuvre d'une annulation et un troisième bouton de retour en arrière pour la mise en œuvre d'un retour en arrière ;
- la deuxième surface comprend, en outre, au moins deux bossages secondaires, de préférence dix bossages secondaires, chaque bossage secondaire étant configuré pour indiquer tactilement l'emplacement d'un bouton numérique respectif ;
- les bossages secondaires comprennent un premier bossage secondaire et au moins un deuxième bossage secondaire, le premier bossage secondaire étant configuré pour indiquer tactilement l'emplacement d'un bouton numérique prédéfini du pavé numérique, de préférence de l'emplacement du chiffre « 5 » ;
- chaque bossage secondaire a une forme circulaire ;
- chaque deuxième bossage secondaire présente une forme configurée pour définir le contour du bouton numérique correspondant du pavé numérique ;
- le film est fabriqué en verre ou en plastique, le verre étant de préférence un verre trempé ;
- chaque bossage primaire a une épaisseur comprise entre 0,05 mm et 0,2 mm.

L'invention concerne également un ensemble comprenant :
- un terminal de paiement électronique comprenant un écran tactile configuré pour définir au moins un bouton fonctionnel pour la mise en œuvre d'une fonction dédiée, et
- un film de protection tel que décrit ci-dessus, chaque bossage primaire ayant une forme spécifique indiquant tactilement l'emplacement d'un bouton fonctionnel respectif.

L'invention apparaîtra plus clairement à la lecture de la description qui va suivre, donnée uniquement à titre d'exemple non limitatif, et faite en référence aux dessins sur lesquels :
[Fig. 1] la figure 1 est une vue schématique en perspective d'un ensemble selon l'invention comprenant un terminal de paiement électronique et un film de protection selon un premier mode de réalisation ;
[Fig. 2] la figure 2 est une vue schématique en perspective du film de protection de la Figure 1 ; et
[Fig. 3] la figure 3 est une vue analogue à celle de la figure 2, selon un deuxième mode de réalisation de l'invention.

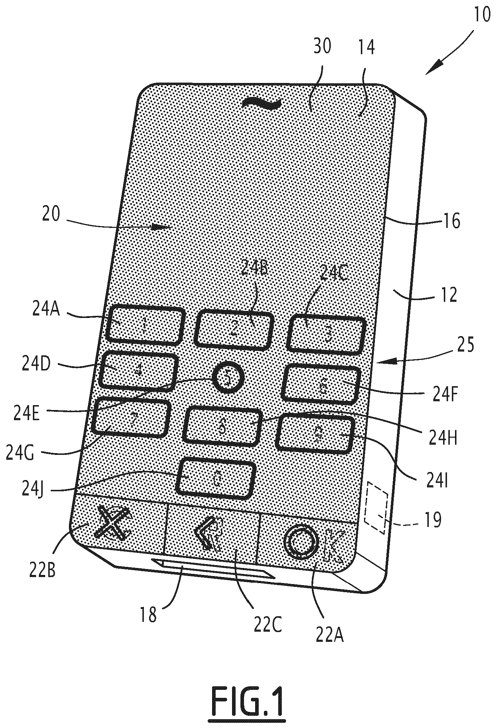

La Figure 1 illustre un ensemble 10 comprenant un terminal de paiement électronique 12 et un film de protection 14.

Le terminal de paiement électronique 12 est par exemple un appareil électronique configuré pour réaliser des transactions financières sécurisées par carte de paiements.

Le terminal de paiement électronique 12 comprend un écran tactile 16 et de préférence au moins un lecteur de carte 18.

Avantageusement, le terminal de paiement électronique 12 comprend également un contrôleur 19.

Plus particulièrement, l'écran tactile 16 est configuré pour combiner les fonctionnalités d'affichage et celles de pointage.

L'écran tactile 16 est par exemple connecté au contrôleur 19.

En particulier, l'ecran tactile 16 définit une zone d'affichage 20.

La zone d'affichage 20 est de préférence configurée pour afficher des informations générées par le contrôleur 19, comme par exemple des instructions d'utilisation, le prix ou un message d'erreur.

L'écran tactile 16 est configuré pour définir au moins un bouton fonctionnel 22A-C pour la mise en œuvre d'une fonction dédiée. Pour chaque bouton fonctionnel 22A-C, un appui tactile d'un utilisateur sur un bouton fonctionnel 22A-C respectif entraîne alors la commande de la fonction dédiée associée audit bouton fonctionnel 22A-C respectif, en vue de la mise en œuvre, i.e. de la réalisation, de ladite fonction. En d'autres termes, l'appui de tactile de l'utilisateur sur un bouton fonctionnel 22A-C respectif engendre l'activation, ou encore l'actionnement, de la fonction dédiée associée audit bouton fonctionnel 22A-C respectif.

Autrement dit, l'écran tactile 16 est configuré pour afficher chaque bouton fonctionnel 22A-C, en particulier sur la zone d'affichage 20. Par ailleurs, l'écran tactile 16 est configuré pour qu'un pointage du bouton fonctionnel 22A-C, par exemple par un appui tactile, entraîne la mise en œuvre d'une fonction dédiée par le contrôleur 19.

De préférence, l'au moins un bouton fonctionnel comprend un premier bouton 22A, un deuxième bouton 22B et/ou un troisième bouton 22C.

Le premier bouton 22A est par exemple un bouton de validation, en particulier la fonction dédiée étant la validation d'une action, telle que la saisie du code confidentiel.

Le deuxième bouton 22B est par exemple un bouton d'annulation, en particulier la fonction dédiée étant l'annulation d'une action, telle que la saisie du code confidentiel par exemple.

Le troisième bouton 22C est par exemple un bouton associé à une fonction de retour en arrière, c'est-à-dire d'annulation de la saisie du dernier chiffre.

L'homme du métier comprendra alors que lorsque la fonction dédiée est l'annulation d'une action, cela correspond à une annulation de l'action au global, telle que la saisie du code confidentiel au global, c'est-à-dire la saisie des multiples chiffres formant le code confidentiel ; et lorsque la fonction dédiée est le retour en arrière, cela correspond à l'annulation de la seule saisie du dernier chiffre, mais pas à l'annulation de l'ensemble du code confidentiel.

Comme illustré sur la Figure 1, l'écran tactile 16 est en outre configuré pour définir au moins un bouton numérique, de préférence dix boutons numériques 24A-J définissant ensemble un pavé numérique 25.

En particulier, chaque bouton numérique 24A-J correspond à un chiffre entre 0 et 9. En particulier, le pointage d'un des boutons numériques 24A-J entraîne la saisie du chiffre correspondant.

De préférence, les boutons numériques 24A-J sont positionnés de manière conventionnelle pour les pavés numériques, c'est à dire en trois lignes de trois boutons dans l'ordre croissant de 1 à 9 et une ligne avec uniquement un bouton numérique 24J correspondant au chiffre « 0 ».

Par exemple, le bouton numérique 24E associé au chiffre « 5 » est sensiblement au centre du pavé numérique 25.

L'homme du métier observera alors que chaque bouton fonctionnel 22A-C est distinct d'un bouton numérique 24A-J correspondant à un chiffre du pavé numérique 25. Autrement dit, la fonction dédiée mise en œuvre par chaque bouton fonctionnel 22A-C est distincte de la saisie d'un chiffre, la fonction de saisie de chiffre étant réservée aux boutons numériques 24A-J.

De préférence, le lecteur de carte 18 est connecté au contrôleur 19 du terminal de paiement électronique 12.

Le lecteur de carte 18 comprend par exemple une fente d'insertion de carte comme illustré sur la figure 1.

Le lecteur de carte 18 comprend de préférence une puce RFID (de l'anglais « *Radio Frequency IDentification* » signifiant indentification radiofréquence), une puce NFC (de l'anglais « *near-field communication* » signifiant communication en champ proche) et/ou un lecteur magnétique.

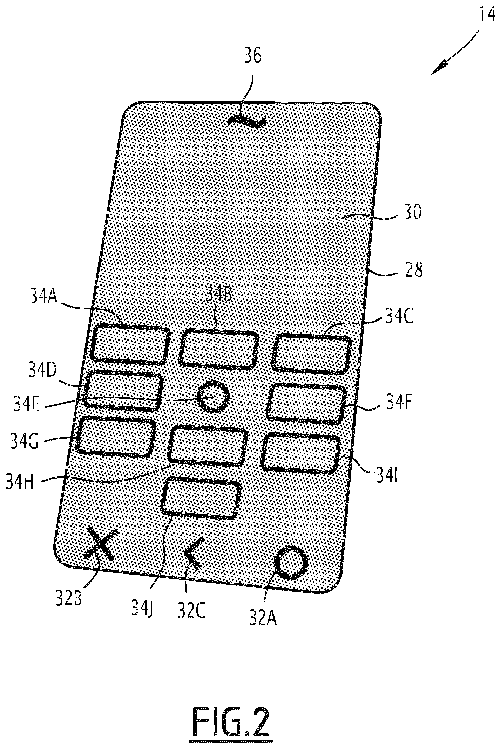

Comme cela est visible sur la figure 2, le film de protection 14 comprend une première surface 28 et une deuxième surface 30 opposées l'une à l'autre.

Le film de protection 14 a par exemple une forme sensiblement de pavé droit avec une épaisseur, mesurée entre la première surface 28 et la deuxième surface 30, très inférieure aux deux autres dimensions.

En particulier, le film de protection 14 a une épaisseur comprise entre 0,3 mm et 1,5 mm, et de préférence entre 0,5 mm et 1,1 mm.

Le film de protection 14 est de préférence transparent, en particulier, de sorte que la zone d'affichage 20 de l'écran tactile 20 soit visible avec netteté lorsque le film de protection 14 est agencée sur l'écran 16.

En variante, le film de protection 14 est translucide.

Encore en variante, le film de protection 14 est à opacité variable. En d'autres termes, l'opacité du film de protection 14 varie, par exemple, en fonction de l'intensité lumineuse reçue par le film de protection 14.

Le film de protection 14 est par exemple fabriqué en verre, de préférence en verre trempé.

De manière encore plus préférentielle, le film de protection 14 est fabriqué en un verre trempé d'alcali-aluminosilicate, par exemple de la marque Gorilla Glass ^{™}.

En variante, le film de protection 14 est fabriqué en plastique, par exemple en un polymère résistant aux chocs.

De préférence, chacune de la première surface 28 et de la deuxième surface 30 du film de protection 14 a une forme sensiblement rectangulaire avec avantageusement des dimensions correspondantes à celles de l'écran tactile 16 du terminal de paiement 12.

La première surface 28 du film de protection 14 est configurée pour être agencée sur l'écran tactile 16 du terminal de paiement électronique 12.

Autrement dit, la première surface 28 du film de protection 14 est configurée pour être agencée ou disposée au contact de l'écran tactile 16 du terminal de paiement électronique 12.

De préférence, la première surface 28 est configurée pour être fixée à l'écran tactile 18, notamment par collage.

Par exemple, la première surface 28 est recouverte d'un adhésif.

Comme illustré sur la Figure 1, la deuxième surface 30 du film de protection 10 définit de préférence la surface visible par un utilisateur et la surface de pointage tactile pour un utilisateur lorsque le film de protection 14 est agencé sur l'écran 16 comme illustré sur la Figure 1.

En particulier, lorsque le film de protection 14 est agencé sur l'écran 16, un appui tactile sur la deuxième surface 30 du film de protection 14 au niveau d'un des boutons tactiles 22A-C, 24A-J entraîne un pointage dudit bouton.

Comme cela est visible sur la figure 2, la deuxième surface 30 du film de protection 14 comprend une pluralité de bossages, dont une pluralité de bossages primaires 32A-C, de préférence également au moins deux bossages secondaires 34A-J, et/ou avantageusement au moins un bossage tertiaire 36.

En particulier, chaque bossage 32A-C, 34A-J, 36 s'étend en saillie perpendiculaire vers l'extérieur de la deuxième surface 30 du film de protection 14.

Chaque bossage 32A-C, 34A-J, 36 a par exemple une épaisseur comprise entre 0,05 mm et 0,2 mm, et de préférence entre 0,07 mm et 1,2 mm.

De préférence, chaque bossage 32A-C, 34A-J, 36 est défini sur la deuxième surface 30 du film de protection 14 par moulage.

Chaque bossage primaire 32A-C a une forme spécifique configurée pour indiquer tactilement l'emplacement d'au moins un des boutons fonctionnels 22A-C affichés sur l'écran 16 du terminal de paiement électronique 12.

De préférence, la pluralité de bossages comprend au moins trois bossages primaires 32A, 32B, 32C, chacun des bossages primaires 32A, 32B, 32C ayant une forme spécifique configurée pour indiquer tactilement l'emplacement d'un des premier, deuxième et troisième boutons 22A, 22B, 22C.

Par exemple, comme illustré sur les Figures 1 et 2, la pluralité de bossages comprend un premier bossage primaire 32A ayant une forme spécifique configurée pour indiquer tactilement l'emplacement du premier bouton 22A correspondant par exemple à un bouton de validation.

Par exemple, le premier bossage primaire 32A a une forme annulaire ou de coche.

Par exemple, la pluralité de bossages comprend également un deuxième bossage primaire 32B ayant une forme spécifique configurée pour indiquer tactilement l'emplacement du deuxième bouton 22B correspondant par exemple à un bouton d'annulation.

Par exemple, le deuxième bossage primaire 32A a une forme de croix.

Par exemple, la pluralité de bossages comprend également un troisième bossage primaire 32C ayant une forme spécifique configurée pour indiquer tactilement l'emplacement du troisième bouton 22C correspondant par exemple à un bouton de retour en arrière.

Par exemple, le troisième bossage primaire 32C a une forme de pointe de flèche.

Avantageusement, la pluralité de bossages comprend au moins deux bossages secondaires 34A-J, de préférence dix bossages secondaires 34A-J.

En particulier, chacun des bossages secondaires 34A-J est configuré pour indiquer tactilement l'emplacement d'un bouton numérique 24A-J correspondant à un chiffre du pavé numérique 25.

Comme illustré sur les Figures 1 et 2, les bossages secondaires comprennent de préférence un premier bossage secondaire 34E, configuré pour indiquer l'emplacement d'un bouton numérique prédéfini 24E du pavé numérique 25. De préférence, le bouton numérique prédéfini 24E correspond au chiffre « 5 ».

Le premier bossage secondaire 34E a par exemple une forme circulaire, par exemple de diamètre compris entre 4 mm et 6 mm.

Comme illustré sur les Figures 1 et 2, les bossages secondaires comprennent avantageusement au moins un deuxième bossage secondaire, et de préférence neuf deuxièmes bossages secondaires 34A-D, 34F-J.

Dans le premier mode de réalisation illustré sur les Figures 1 et 2, chaque deuxième bossage secondaire 34A-D, 34F-J présente une forme configurée pour définir le contour du bouton numérique 24A-J correspondant du pavé numérique 25.

En particulier, chaque deuxième bossage secondaire 34A-D, 34F-J présente une forme rectangulaire à coins arrondis.

Par exemple, la deuxième surface 30 du film de protection 14 comprend également au moins un bossage tertiaire 36.

Le bossage tertiaire 36 est de préférence configuré pour indiquer tactilement l'orientation dudit l'écran 16. Par exemple, le bossage tertiaire 36 est disposé au niveau d'un des bords de l'écran 16.

Par exemple, ledit bossage tertiaire 36 représente un logo, une indication en braille ou une forme reconnaissable tactilement, telle qu'une flèche ou une vague.

Un procédé d'utilisation de l'ensemble 10 tel que décrit ci-dessus par un utilisateur malvoyant va maintenant être décrit.

Dans un premier temps, un ensemble 10 est fourni.

En particulier, le film de protection 14 est agencé sur l'écran 16 du terminal de paiement 12. Plus particulièrement, la première surface 28 du film de protection 14 est collée sur l'écran tactile 16.

En touchant la deuxième surface 30 du film de protection 12, et en particulier le premier bossage secondaire 34E et/ou le bossage tertiaire 36, l'utilisateur repère l'orientation du terminal de paiement 12, et donc l'emplacement du lecteur de carte 18.

Par exemple, l'utilisateur insère ensuite sa carte de paiement dans la fente d'insertion du lecteur de carte 18.

Le terminal de paiement 12 lit la carte de paiement de l'utilisateur et instruit l'utilisateur de saisir son code confidentiel.

L'utilisateur identifie ensuite tactilement le pavé numérique 25 et l'emplacement de chacun des boutons numériques 24A-J, notamment grâce aux bossages secondaires 34A-J.

Plus précisément, grâce au premier bossage secondaire 34E, l'utilisateur identifie tactilement le centre du pavé numérique 25, en particulier le bouton numérique 24E correspondant au chiffre « 5 », qui constitue avantageusement un point de repère pour identifier l'emplacement des autres boutons numériques 24A-D, 24F-J du pavé numérique 25.

Puis, l'utilisateur saisit son code confidentiel de carte de paiement en appuyant sur chacun de boutons numériques 24A-J identifié grâce au bossage secondaire 34A-J correspondant. Ensuite, l'utilisateur le valide en appuyant par exemple sur le premier bouton 22A identifié grâce au premier bossage primaire 32A.

Si nécessaire, l'utilisateur peut annuler ou revenir en arrière en appuyant par exemple sur le deuxième bouton 22B ou le troisième bouton 22C identifié grâce au bossage primaire 32B, 32C correspondant.

Un tel film de protection 14 permet ainsi à un utilisateur malvoyant de reconnaitre plus facilement l'emplacement de boutons 22A-C, 24A-J sur l'écran tactile 16 du terminal de paiement 12.

En effet, grâce à chacun des bossages 32A-C, 34A-J, un utilisateur malvoyant peut identifier tactilement l'emplacement de chacun des boutons 22A-C, 24A-J affichés sur l'écran tactile 16.

De plus, un tel film de protection 14 peut être facilement adapté à tous types de terminal de paiement électronique 12 et être agencé sur des terminaux de paiement 12 déjà utilisés.

Par ailleurs, un tel film de protection 14 présente l'avantage de ne pas modifier l'utilisation pour les utilisateurs voyants.

L'invention n'est pas limitée aux exemples de réalisation et aux variantes décrits auparavant.

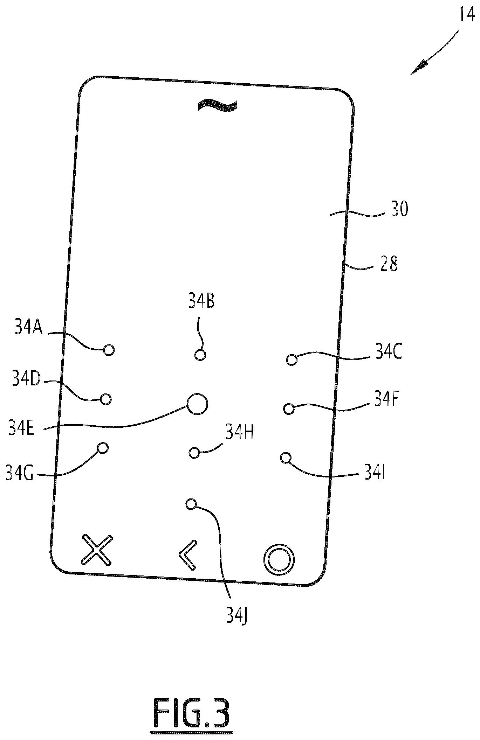

En particulier, on décrit ci-dessous un film de protection 14 selon un deuxième mode de réalisation de l'invention illustré sur la Figure 3.

A la différence du premier mode de réalisation, chaque deuxième bossage secondaire 34A-D, 34H-J présente une forme circulaire.

De préférence, le film de protection 14 comprend neuf deuxièmes bossages secondaires 34A-D, 34H-J de forme circulaire de diamètre identique, par exemple compris entre 2 mm et 3 mm.

De préférence, le diamètre de chaque deuxième bossage secondaire 34A-D, 34H-J est suffisamment différent de celui du premier bossage secondaire 34E, de sorte qu'il soit possible tactilement de les différencier.

Par exemple, le diamètre du cercle de chaque deuxième bossage secondaire 34A-D, 34H-J est de deux fois plus petit que celui du premier bossage secondaire 34E.

## Revendications

1. Film de protection (14) pour écran tactile (16) d'un terminal de paiement électronique (12), le film de protection (14) comprenant une première surface (28) et une deuxième surface (30) opposées,
la première surface (28) étant configurée pour être agencée sur un écran tactile (16) d'un terminal de paiement électronique (12),
la deuxième surface (30) comprenant une pluralité de bossages primaires (32A-C), chaque bossage primaire (32A-C, 34A-J) ayant une forme spécifique configurée pour indiquer tactilement l'emplacement d'au moins un bouton fonctionnel (22A-C) pour la mise en œuvre d'une fonction dédiée défini sur l'écran (16) du terminal de paiement électronique (12), chaque bouton fonctionnel (22A-C) étant distinct d'un bouton numérique (24A-J) correspondant à un chiffre d'un pavé numérique (25) du terminal de paiement électronique (12).

2. Film de protection (14) selon la revendication 1, dans lequel la pluralité de bossages comprend au moins trois bossages primaires (32A-C) ;
chaque bouton fonctionnel (22A-C) étant de préférence choisi parmi un premier bouton (22A) de validation pour la mise en œuvre d'une validation, un deuxième bouton (22A) d'annulation pour la mise en œuvre d'une annulation et un troisième bouton (22C) de retour en arrière pour la mise en œuvre d'un retour en arrière.

3. Film de protection (14) selon la revendication 1 ou 2, dans lequel la deuxième surface (30) comprend, en outre, au moins deux bossages secondaires (34A-J), de préférence dix bossages secondaires, chaque bossage secondaire (34A-J) étant configuré pour indiquer tactilement l'emplacement d'un bouton numérique (24A-J) respectif.

4. Film de protection (14) selon la revendication 3, dans lequel les bossages secondaires comprennent un premier bossage secondaire (34E) et au moins un deuxième bossage secondaire (34A-D, 34F-J), le premier bossage secondaire (34E) étant configuré pour indiquer tactilement l'emplacement d'un bouton numérique prédéfini (24E) du pavé numérique (25), de préférence de l'emplacement du chiffre « 5 ».

5. Film de protection (14) selon la revendication 3 ou 4, dans lequel chaque bossage secondaire (34A-J) a une forme circulaire.

6. Film de protection (14) selon la revendication 4, dans lequel chaque deuxième bossage secondaire (34A-D, 34F-J) présente une forme configurée pour définir le contour du bouton numérique (24A-D, 24F-J) correspondant du pavé numérique (25).

7. Film de protection (14) selon l'une quelconque des revendications précédentes, dans lequel le film (14) est fabriqué en verre ou en plastique ;
le verre étant de préférence un verre trempé.

8. Film de protection (14) selon l'une quelconque des revendications précédentes, dans lequel chaque bossage primaire (32A-C) a une épaisseur comprise entre 0,05 mm et 0,2 mm.

9. Ensemble (10) comprenant :
- un terminal de paiement électronique (12) comprenant un écran tactile (16) configuré pour définir au moins un bouton fonctionnel (22A-C) pour la mise en œuvre d'une fonction dédiée, et
- un film de protection (14) selon l'une quelconque des revendications précédentes, chaque bossage primaire (32A-C) ayant une forme spécifique indiquant tactilement l'emplacement d'un bouton fonctionnel (22A-C) respectif.
